# EUROPEAN PATENT SPECIFICATION

(11) **EP 1 234 151 B1**
(45) Date of publication and mention of the grant of the patent: **13.10.2004**
(21) Application number: 00983635.4
(22) Date of filing: 04.12.2000
(51) Int. Cl.: F26B 5/06, A01N 1/00

(54) **METHOD AND DEVICE FOR TREATING ORGANIC MATTER**
VERFAHREN UND VORRICHTUNG ZUR BEHANDLUNG VON ORGANISCHEM MATERIAL
PROCEDE ET DISPOSITIF POUR LE TRAITEMENT DE MATIERE ORGANIQUE

(30) Priority: 03.12.1999 SE 9904433
(43) Date of publication of application: 28.08.2002
(73) Proprietor: Promessa AB, 474 96 Nösund (SE)
(72) Inventor: Wiigh-Mäsak, Susanne, 474 96 Nösund (SE)
(74) Representative: Inger, Lars Ulf Bosson
(86) International application number: PCT/SE2000/002429
(87) International publication number: WO 2001/040727

(56) References cited:
- DE-A1- 3 520 609
- DE-A1- 3 842 341
- US-A- 4 067 091
- US-A- 5 780 295

## Description

### Technical field

The present invention relates to a method for treating organic matter to mouldering after freeze drying, in accordance with the preamble of claim 1. Such a method is known, for example, from US-A-4 067 091.

The object of the present invention is to obtain a method for pretreating organic matter for a mouldering process.

The invention also relates to a device for carrying out such a method.

### Background of the invention

Organic matter can be treated in different ways to be able to be used as a nutritional source. At a common compost organic matter, often so called garden sewage, or kitchen sewage, is brought into a compost vessel and in the presence of oxygen different micro organisms, wood-lice, worms and other small animals can decompose to a nutritionally rich soil, so that plants can utilize the nutritional contents of the material, once again.

As mentioned such mouldering shall be carried out while adding oxygen, which means that a compost should not have any content more than about 25 cm from an airing surface. In a well functioning compost there is no rottening taking place but the leaving gas is steam and carbon dioxide, as well as possibly some nitrogen gas. The temperature of a normal compost is about 30-35°C which provides for an optimal mouldering. During winter time, however, the temperature falls whereby the process rate decreases but still there is a mouldering taking place.

So called hot-compost means that the compost works at a very elevated temperature, 60-70°C and means that it is not a pure mouldering process as worms, wood-lice and a great part of the micro organisms do not feel comfortable at such temperatures, but the decomposition takes place via heat resistant micro organisms only. The decomposition is moreover slow and takes place during rottening producing gases which smell badly.

Composting of house-hold waste may also contribute to drawbacks in the form of rats and mice which are tempted to the compost if the mouldering does not take place fast enough. The greatest problem occurs of course when more complex structures shall be composted such as slaughter and hunting wastes.

At soil burials of a human body the body is placed at a depth pf 180-200 cm at which depth, however, no mouldering takes place, in the absence of oxygen, but rather a rottening takes place under the influence of sulphur producing micro organisms. The rotten body will flow away in the form of a liquid from the grave cavity. The soil, plants will not be able to assimilate the nutritional content of the organic part of the body.

The reason why humans are buried at large depths goes several hundreds of years back in time and was of course a way to stop animals from digging up the body after a burial.

At cremation the body is burned at a high temperature and the remains consist of mineral rich ashes which can be deposed in a um, or often today, is spread in a memorial park. When the ashes are spread in a memorial park the ashes will solubilize at rain falls or other type of down falls and the mineral salt solution obtained will flow away and penetrate into the deeper soil layers without being able to be assimilated by the surrounding ground vegetation. From an environmental point of view cremation should not be recommended either as on one hand gaseous mercury leaves teeth fillings, on the other hand the burning will contribute to the green house effect by releasing great amounts of carbon dioxide.

An efficient way of burying a human body so that the remains moulder and the nutritional contents of the organic matter can be assimilated by the ground vegetation does not exist today.

However, there is a belief that we shall return to earth, which is reflected in the expression "Earth to earth, ashes to ashes, dust to dust" of the burial ceremony, which provides the basis for all our life philosophy. Facts show, however, that we do not return to earth but flow away in liquid state.

This life philosophic belief can not be fulfilled using the high degree of embalming of death persons, in particular in the larger cities, where burial capacity is small due to a preference for carrying out funerals under a few of the days of the week, only. Embalming means that great amounts of preserving formaldehyde is pumped into the body and replaces blood and other body liquids. The formaldehyde as such means that a correct mouldering will not take place.

The body should be stored chilled or frozen until the burial event.

US-A-4,067,091 discloses a process for freeze drying a human body to prepare it for an earth burial, and where the object is to provide a moulderable remain. The process is carried out by deep freezing the body, to treat the body at a temperature of below -100°C, to mechanically disintegrate the body into particulate form using e.g., a hammer mill, to freeze dry the particles for removing 95% of the water content and to depose the remains of the freeze drying. Disintegration of a human body in this way prior to freeze drying is, however, not ethically defendable.

DE-A-3,842,341 discloses a process for dewatering animal carcasses and/or chicken eggs by means of freeze drying at temperatures between -15 and -30°C and a pressure of between 1x10² and 3x10² Pa, optionally after a disintegration at a temperature of 15-25°C. The freeze dried mass can then be stored at room temperature, be burned or be used as a fertilizer.

Thus there is a request for being able to treat organic matter, such as material of vegetabilic and of animal origin so that it can be mouldered in a natural way, as well as in an ethically correct way, when so requested.

### Description of the present invention

It has now turned out possible to be able to solve this problem by means of the present invention which is defined in claim 1 (method) and claim 8 (device).

Further characteristics are evident from the accompanying claims.

The term splitting process means here that the body is subjected to a perforation process in accordance with below. The splitting process thus does not mean a fragmentation into a particulate form but only that the tissue structure exhibits channels or fractures through which water can sublimate in a simple way.

By means of the present invention it is achieved that a rapid freeze drying can take place using reasonable amounts of energy. Calculations made shows that burning requires at least the same or a larger input of energy, to obtain mineral ashes.

According to the invention, perforation of the organic matter, primarily then the animal material, is carried out using water jets of high pressure, preferably airless jets, i.e., without any addition of air, a high pressure steam or a high energy laser. A vegetabilic oil under high pressure can also replace the water in the foregoing. In an embodiment which is not in accordance with the invention, the splitting process can be achieved by rapid and large freezing of the organic matter, for example by use of liquid nitrogen having a boiling point of about -190°C.

Perforation shall be carried out using such density and from such directions that one preferably forms cubic elements having the side 1 to 2 cm. What is meant is that the perforating jets forms one or more side edges at such a cube prior to freeze drying. This means further that a perforation takes place from at least two sides, suitably arranged substantially perpendicular to each other. Primarily, the perforation further takes place along the body to perforate the large connecting tissue structures of the body.

When the freeze drying has been carried out, the material thus dried is subjected to a light falling down chock/knock so it collapses, whereupon it can be gathered and placed in a suitable container.

A suitable container for deposition for further mouldering can be a moulderable board or container made of peat which can be placed at a depth of about 25 cm underneath the ground surface where mouldering under aerobic conditions will take place.

If one relates to a burial in soil of a deceased, freeze dried person one may, e.g., simultaneously plant a memorial tree close to the burial site, whereby the planted plant will assimilate the mouldering residues.

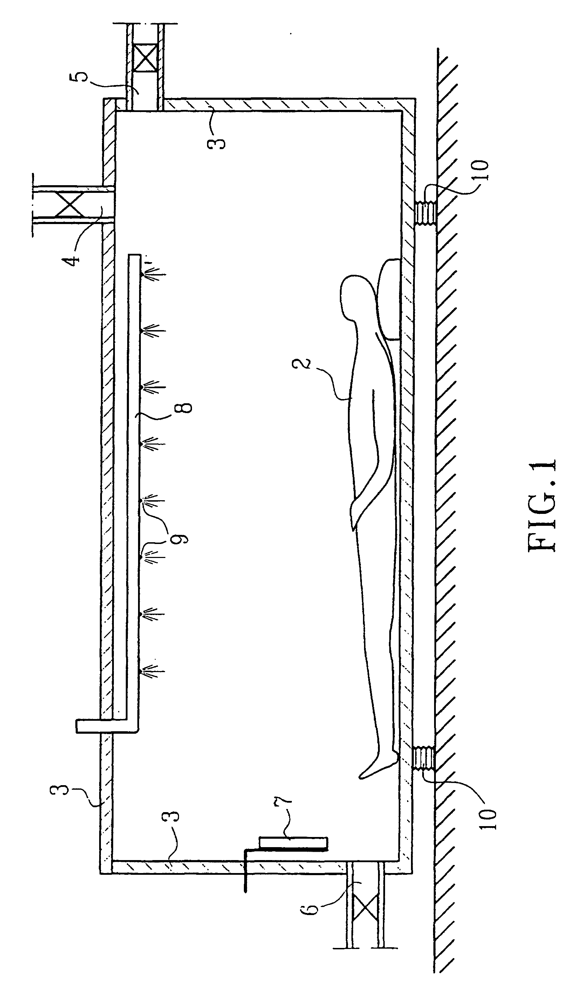

The invention will be described in the following more in detail with reference to the accompanying drawing, wherein
FIG. 1 shows a schematic side view of a device for freeze drying of a person where the device comprises a larger vessel 1 having room for a dead body 2 and having surrounding walls and lid/roof 3 to be able to completely enclose the body 2 in liquid nitrogen. The walls 3, in this example, comprises elements for receiving sublimated water, i.e., chilled contact surfaces. The lid 3 of the device 1, which in this embodiment further serves as an introduction opening, is provided with a connecting line 4 to a vacuum source (not shown) in able to bring the whole device under vacuum. Further, the vessel 1 is provided with inlet and outlet lines 5, 6 for liquid nitrogen. Optionally, a ultra sonic probe 7 is placed into the vessel in order to be able to transfer an ultra sound to the content of liquid nitrogen and the organic matter submersed therein, thereby to be able to speed up the sublimation of water. The device may also comprise a vessel 1 which is a channel vessel with a device for continuous in and out transport of organic material, in order to be able to obtain a continuous freeze drying of organic material.

To the lid 3 there is further arranged a series of high pressure lines 8 having nozzles 9 for being able to carry out a perforation of a body 2 introduced into the vessel 1, using high pressure steam.

Underneath the vessel 1 feet 10, which can be vibrated, are arranged. These are arranged to obtain a shake chock of the material having been treated after freeze drying so that the material collapses and can be collected in a simple way for further packing in a moulderable container (not shown).

A pre-preparing treatment of the material to be freeze dried, either it consists of a dead human body, slaughter waste or a common kitchen waste means that one cools/freezes down the material to -70°C whereupon the material is subjected to a perforating treatment after a predetermined density and pattern using high pressure steam. Then the material is submersed into liquid nitrogen, -190°C, whereby its content of water is allowed to sublime to a condensing surface, optionally via a passage in a warmer stream of air having greater ability of carrying moisture.

In order to support the sublimation the material can be subjected to either subpressure in the size of 1x10² - 1x10³ Pa and/or be subjected to ultra sound treatment.

When the calculated amount of water has been removed which is simple determined by controlling the amount of water condensed, the material is subjected to a shake chock, whereby the material collapses and can be collected.

### TEST

Drying has been performed on beef and pork meat as well as pork fat and pork legs. The drying was carried out in a conventional laboratory freeze drier at -50°C and by using a vacuum of 1x10² Pa. Parallel hereto fat concentration and water content was determined by a chemical laboratory and the drying resulted in that all water having been registered as water content at the laboratory test was found eliminated. The residual amount of water was less than 1% in most samples.

Treatment using submersing in liquid nitrogen resulted in formation of fractures in both bone and muscle tissue. Such formation of fractures did not exist in samples having been cooled to -80°C. This indicates that the spontaneous splitting of the meat is facilitated by the extremely rapid cooling as the treatment using liquid nitrogen means. If perforation has started the process and optionally been supported by an ultra sound treatment the spontaneous splitting is further facilitated. It is extremely important from an ethical point of view and the dominant reason that the present process differs from what has been known from US-A- 4,067,091.

In total 10 different tests were carried out of which four are shown here and which can be regarded most typical to the result obtained.

**Table**

| **Chem. Lab analysis** | | **Drying result** | | |
|---|---|---|---|---|
| Fat content | Water content | Original | Dried | Water dried off |
| (%) | (%) | weight (g) | weight (g) | (%) |
| 1. 22,97 | 59,58 | 61,190 | 24,462 | 60,02 |
| 2. 22,35 | 59,78 | 167,767 | 68,483 | 59,20 |
| 3. 33,91 | 51,97 | 38,642 | 18,580 | 51,90 |
| 4. 31,95 | 52,72 | 142,125 | 67,975 | 52,17 |

As evident from the Table above an almost complete dewatering of the material was obtained. The material was perforated to 1-2 x 1-2 x 1-2 cm large cubes.

The material so freeze dried to be mouldered is collected in a moulderable container, such as compressed peat, paper, cardboard, board or the similar and is placed in a suitable site in soil and at a depth of up to 25 cm. In connection with a rehydratization and influence by micro organisms, insects, worms, and small animals the material is odourless mouldered to compost soil having a high nutritional value, which can be assimilated by nearby vegetation.

Optionally, as the freeze dried material is light hygroscopic the container can suitably be provided with a water tight layer, such as an easily decomposable starch polymer, so called corn plastic, which forms an effective water barrier when the product is stored above ground.

An organic material which is very rapidly decomposed under simultaneous production of odour, is fish and shellfish wastes and these are very suitable for the present treatment, as well, where the water content can be lowered to some percent and the material can then be composted, optionally after a preceding packing in a moulderable container.

## Claims

1. Method for treating organic matter to mouldering after freeze drying, wherein organic material, preferably a chilled condition, more preferably in a frozen state, is subjected to a splitting process and the material is then subjected to a freeze drying process prior to being transferred for deposition for mouldering,
**characterized in that** the splitting process is in the form of a perforating treatment by means of high pressure water jets, preferably airless, high pressure steam, high energy laser or a vegetable oil under high pressure.

2. Method according to claim 1,
**characterized in that** the perforation takes place from at least two sides, suitably arranged perpendicular to each other.

3. Method according to claim 1 or 2,
**characterized in that** freeze drying is carried out during simultaneous influence of ultra sound.

4. Method according to claim 1 or 2,
**characterized in that** freeze drying is carried out during simultaneous influence of vacuum.

5. Method according to claim 1-4,
**characterized in that** the material is slaughter waste.

6. Method according to claim 1-4,
**characterized in that** the material is household/kitchen waste.

7. Method according to claim 1-4,
**characterized in that** the material is fish and/or shell fish waste.

8. A device for carrying out the method according to claims 1-7, comprising a closed vessel (1) provided with an inlet opening for an organic material, inlet and outlet (5, 6) for liquid nitrogen as well as a connection (4) to a vacuum source, a device (8, 9) for carrying out a splitting by means of high pressure water jets, preferably airless, high pressure steam, high energy laser or a vegetable oil under high pressure.

9. Device according to claim 8,
**characterized in that** it further comprises an ultra sound probe (7).

10. Device in accordance with any of claims 8 and 9,
**characterized in that** the vessel (1) consists of a tunnel vessel for a continuous in and out transport of organic material.

11. Device in accordance with one or more of claims 8-10,
**characterized in that** it further comprises a device (10) for obtaining a shake chock on an organic material after a freeze drying present in the device.

## Patentansprüche

1. Verfahren zur Behandlung von organischem Material zur Formung nach Gefriertrocknung, wobei organisches Material, vorzugsweise ein gekühltes Wesen, weiter bevorzugt in einem gefrorenen Zustand, einem Zerteilungsprozess unterworfen wird, und das Material dann einem Gefriertrocknungsprozess unterworfen wird, bevor es zur Lagerung für die Formung übertragen wird,
**dadurch gekennzeichnet,**
**dass** der Zerteilungsprozess ein Perforierbehandlung mittels Hochdruckwasserstrahlen, vorzugsweise luftarmen Hochdruckdampfes, Hochenergielasers oder eines Pflanzenöls unter hohem Druck ist.

2. Verfahren nach Anspruch 1,
**dadurch gekennzeichnet,**
**dass** die Perforierung von mindestens zwei Seiten stattfindet, die passend zueinander senkrecht angeordnet sind.

3. Verfahren nach Anspruch 1 oder 2,
**dadurch gekennzeichnet,**
**dass** die Gefriertrocknung während eines gleichzeitigen Einflusses von Ultraschall durchgeführt wird.

4. Verfahren nach Anspruch 1 oder 2,
**dadurch gekennzeichnet,**
**dass** die Gefriertrocknung während eines gleichzeitigen Einflusses von Vakuum durchgeführt wird.

5. Verfahren nach Anspruch 1 bis 4,
**dadurch gekennzeichnet,**
**dass** das Material Schlachtabfall ist.

6. Verfahren nach Anspruch 1 bis 4,
**dadurch gekennzeichnet,**
**dass** das Material Haushalts-/Küchen-Abfall ist.

7. Verfahren nach Anspruch 1 bis 4,
**dadurch gekennzeichnet,**
**dass** das Material Fisch- und/oder Schalentier-Abfall ist.

8. Vorrichtung zur Durchführung des Verfahrens nach einem der Ansprüche 1 bis 7, die einen geschlossenen Behälter (1), der mit einer Einlassöffnung für ein organisches Material versehen ist, einen Einlass und einen Auslass (5, 6) für flüssigen Stickstoff sowie einen Anschluss (4) an eine Vakuumquelle, eine Vorrichtung (8, 9) zum Durchführen einer Zerteilung mittels Hochdruckwasserstrahlen, vorzugsweise luftlosen Hochdruckdampfes, Hochenergielasers oder eines Pflanzenöles unter hohem Druck aufweist.

9. Vorrichtung nach Anspruch 8,
**dadurch gekennzeichnet,**
**dass** sie außerdem eine Ultraschallsonde (7) aufweist.

10. Vorrichtung nach Anspruch 8 und 9,
**dadurch gekennzeichnet,**
**dass** der Behälter (1) aus einem Tunnelbehälter für einen kontinuierlichen Ein- und Ausgabetransport eines organischen Materials nach einer in der Vorrichtung stattfindenden Gefriertrocknung besteht.

11. Vorrichtung nach einem oder mehreren der Ansprüche 8 bis 10,
**dadurch gekennzeichnet,**
**dass** sie außerdem eine Vorrichtung (10) zum Erhalt eines Schüttelbockes an einem organischen Material nach einer in der Vorrichtung stattfindenden Gefriertrocknung aufweist.

## Revendications

1. Procédé pour le traitement d'une matière organique en vue d'un moulage après lyophilisation, dans lequel
la matière organique, de préférence à l'état réfrigéré, et idéalement à l'état congelé, est soumise à un procédé de découpage, puis est ensuite soumise à un procédé de lyophilisation avant d'être transférée pour être déposée pour moulage, **caractérisé par le fait que** le procédé de découpage consiste en un traitement de perforation au moyen de jets d'eau sous haute pression, de préférence sans air, de vapeur sous haute pression, d'un laser à haute énergie ou d'huile végétale sous haute pression.

2. Procédé conforme à la revendication 1,
**caractérisé par le fait que** la perforation est effectuée à partir d'au moins deux côtés, idéalement situés perpendiculairement l'un par rapport à l'autre.

3. Procédé conforme à la revendication 1 ou 2,
**caractérisé par le fait que** la lyophilisation est effectuée sous l'influence simultanée d'ultrasons.

4. Procédé conforme à la revendication 1 ou 2,
**caractérisé par le fait que** la lyophilisation est effectuée sous l'influence simultanée du vide.

5. Procédé conforme aux revendications 1 à 4,
**caractérisé par le fait que** la matière consiste en des déchets d'abattoir.

6. Procédé conforme aux revendications 1 à 4,
**caractérisé par le fait que** la matière consiste en des déchets domestiques.

7. Procédé conforme aux revendications 1 à 4,
**caractérisé par le fait que** la matière consiste en des déchets de poissons et/ou de fruits de mer.

8. Un dispositif pour réaliser le procédé conforme aux revendications 1 à 7,
comprenant un récipient fermé (1) doté d'une ouverture d'arrivée pour la matière organique, d'un orifice d'arrivée et de sortie (5, 6) pour l'azote liquide, ainsi que d'un raccordement (4) à une source de vide, d'un dispositif (8, 9) pour effectuer le découpage au moyen de jets d'eau à haute pression, de préférence sans air, de vapeur à haute pression, de laser à haute énergie ou d'huile végétale sous haute pression.

9. Un dispositif conforme à la revendication 8,
**caractérisé par le fait qu'**il comprend en outre une sonde à ultrasons (7).

10. Un dispositif conforme à l'une des revendications 8 et 9,
**caractérisé par le fait que** le récipient (1) consiste en un récipient tunnel pour l'arrivée et l'évacuation en continu de la matière organique.

11. Un dispositif conforme à une ou plusieurs des revendications 8 à 10,
**caractérisé par le fait qu'**il comprend en outre un dispositif (10) prévu pour obtenir une création de secousses sur la matière organique, après la lyophilisation réalisée dans le dispositif.
